# EUROPEAN PATENT SPECIFICATION

(11) **EP 1 967 757 B1**
(45) Date of publication and mention of the grant of the patent: **20.02.2013**
(21) Application number: 06843726.8
(22) Date of filing: 26.12.2006
(51) Int. Cl.: F16F 15/32

(54) **WHEEL BALANCE WEIGHT**
RADGEGENGEWICHT
MASSE D'ÉQUILIBRAGE DE ROUE

(30) Priority: 28.12.2005 JP 2005379496
(43) Date of publication of application: 10.09.2008
(73) Proprietor: Taiho Kogyo Co., Ltd, Toyota-shi, Aichi 471-8502 (JP); TOHO KOGYO CO.,LTD., Toyota-shi Aichi 444-3200 (JP)
(72) Inventor: TAGUCHI, Yukiyasu, Toyota-shi, Aichi 4718502 (JP); SUGAYAUCHI, Tatsuhiko, Toyota-shi, Aichi 4718502 (JP); YAMAGUCHI, Yutaka, Toyota-shi, Aichi 4443200 (JP)
(74) Representative: TBK
(86) International application number: PCT/JP2006/326355
(87) International publication number: WO 2007/077955

(56) References cited:
- EP-A1- 1 355 084
- JP-A- 2004 084 714
- JP-A- 2004 245 289
- JP-A- 2006 292 003
- JP-U- 03 066 945
- US-A- 4 300 803
- US-A1- 2005 104 438
- US-B1- 6 364 421
- US-B1- 6 364 421

## Description

### TECHNICAL FIELD

The present invention relates to such a wheel balance weight that the workability upon assembling it with a wheel is high; in particular, it relates to such a wheel balance weight that the release coated paper is likely to be detached when assembling it with a wheel.

### BACKGROUND ART

In such a wheel-assembled state that a tier of an automobile, or the like, is incorporated into a wheel, there arises a drawback in that, as the imbalance enlarges in the peripheral direction around the rotary shaft of the wheel assembly as well as in the direction of the rotary shaft thereof, the vibrations, noises, and the like, generate upon driving. The vibrations and noises occur resulting from the imbalance in the wheel. In order to cancel the imbalance, a wheel balance weight is assembled with the wheel.

Oneofwheelbalanceweights, which are assembled with wheels, is disclosed in JP- 3, 066, 945U. This wheel balance weight is assembled with a wheel by adhering a weight, which is formed as a substantially-strip-shaped flat-plate configuration, to a wheel by means of an adhesive tape.

Moreover, there is a wheel balance weight whose weight is formed by means of a plurality of weight pieces. This wheel balance weight is disclosed in US-A 6,364,421, for instance and forms the basis of the preamble of claims 1 and 4. This wheel balance weight is also such that the multiple weight pieces are adhered to a wheel with an adhesive tape.

These wheel balance weights are such that, prior to assembling them with a wheel, a release coated paper covers the adhesive tape's adhesive surface to be bonded to a wheel. By means of this release coated paper, the adhesive tape's adhesive surface is protected. And, when assembling them with a wheel, the release coated paper is peeled off to expose the adhesive surface, and then they are adhered to a wheel.

The conventional wheel balance weights are such that an end of the release coated paper is formed to protrude beyond an end of the weight in the width direction so that the release coated paper can be pinched with ease when peeling the release coated paper off from the weight. That is, the conventional wheel balance weights are such that only the release coated paper has protruded beyond an end of the weight in the width direction.

However, in the wheel balance weights with the aforementioned constructions, there have been such a problem that, in the states before assembling them with a wheel, the release coated paper has been bent to curve, or the release coated paper has been come off. Concretely, upon retaining the wheel balance weights before assembly and upon the storage thereof, the release coated paper has been bent to curve, or has been detached depending on cases, when they are pressed onto an object such as a neighboring wheel balance weight.

### Disclosure of Invention

The present invention is one which has been done in view of the aforementioned circumstances, and it is an assignment to provide such a wheel balance weight that the release coated paper is likely to be detached when assembling it with a wheel.

In order to solve the aforementioned assignment, the present inventors have been investigated the configurations of adhesive-tape portion and release coated paper over and over again; as a result, they have arrived at completing the present invention. A wheel balance weight according to the present invention is defined in claims 1 and 4.

A wheel balance weight according to a preferred form of the present invention is further characterized in that, in a wheel balance weight including: a substantially-strip-shaped weight having a weight front surface and a weight rear surface being disposed back to back; an adhesive-tape portion having a tape front surface and a tape rear surface being disposed back to back, the tape front surface being fixed to the weight rear surface, the tape rear surface to be bonded onto a wheel; and a release coated paper covering the tape rear surface in such a state that it is detachable therefrom, the adhesive-tape portion is formed so that its width becomes less than the weight's width; and the release coated paper is formed so that its width is a length surpassing the tape portion's width and becomes the weight's width or less.

A wheel balance weight according to a preferred form of the present invention is further characterized in that, in a wheel balance weight including: a substantially-strip-shaped weight having a weight front surface and a weight rear surface being disposed back to back; an adhesive-tape portion having a tape front surface and a tape rear surface being disposed back to back, the tape front surface being fixed to the weight rear surface, the tape rear surface to be bonded onto a wheel; and a release coated paper covering the tape rear surface at least in such a state that it is detachable therefrom, the adhesive-tape portion includes a slit between an end and another end in the width direction; and it is bonded onto the wheel in such a state that a protruding portion on the another-end side is cut off at least from the slit of the adhesive-tape portion.

### BRIEF DESCRIPTION OF THE DRAWINGS

Fig. 1 is a diagram that illustrates a wheel balance weight according to Example No. 1.

Fig. 2 is a cross-sectional diagram of the wheel balance weight according to Example No. 1.

Fig. 3 is a diagram that illustrates such a state that the wheel balance weight according to Example No. 1 is assembled with a wheel.

Fig. 4 is a cross-sectional diagram of a wheel balance weight according to Example No. 2.

Fig. 5 is a diagram that illustrates a wheel balance weight according to Example No. 3.

Fig. 6 is a diagram that illustrates a wheel balance weight according to Example No. 4.

Fig. 7 is a cross-sectional diagram of the wheel balance weight according to Example No. 4.

Fig. 8 is a cross-sectional diagram of a wheel balance weight according to Example No. 5.

Fig. 9 is a cross-sectional diagram of a wheel balance weight according to Example No. 6.

Fig. 10 is a cross-sectional diagram of a wheel balance weight according to Example No. 7.

Fig. 11 is a cross-sectional diagram of a wheel balance weight according to Example No. 8.

### BEST MODE FOR CARRYING OUT THE INVENTION

Hereinafter, inventions, which make said inventions more concrete, and embodying forms of these inventions will be explained.

(Embodying Forms of Invention)

(First Invention)

A wheel balance weight according to the present invention includes a weight, an adhesive-tape portion, and a release coated paper.

The weight is a substantially-strip-shaped member, which has a weight front surface and a weight rear surface being disposed back to back. The weight cancels imbalance in a wheel assembly when being assembled with a wheel. By the fact that the weight is a substantially strip shape, it becomes easy to curb it like an arc shape in the longitudinal direction by applying a stress in the thickness-wise direction of the weight per se. By means of this, it is possible to deform (curb) the weight in such a shape that goes along the curved shape of wheel. When the weight is curbed in such a shape that goes along the shape of wheel, the adhesiveness of the wheel balance weight (the weight) to the wheel improves. When the adhesiveness improves, the contact area between the weight and the wheel increases, and thereby the wheel balance weight becomes much less likely to come off from the wheel. The weight can preferably be an oblong shape (a rectangular shape), which has a predetermined width, and which extends in the perpendicular direction to the width direction. Moreover, it is preferable that the weight can be such that the substantially strip shape's thickness can be uniform virtually.

Although the weight is not one whose material quality is limited, it is preferable that it can comprise a non-lead-system metal. Non-lead-system metals are such that, even if they should be dumped into the natural world, they exert less environmental load. As for the non-lead-systemmetal for forming the weight, it is possible to name iron-system metals, such as pure iron, steel and stainless, in which iron is adapted to being the major component.

The adhesive-tape portion is a member, which has a tape front surface and a tape rear surface being disposed back to back, in which the tape front surface is fixed to the weight rear surface, and in which the tape rear surface is to be bonded onto a wheel. That is, the adhesive-tape portion bonds (adheres) the weight onto a wheel. The adhesive-tape portion is such that, as far as being a member that can bond the weight onto a wheel, it is not one which is limited; for example, it is possible to name double-sided adhesive tapes, which have an adhesive surface on the both surfaces.

It is preferable that the adhesive-tape portion can have the tape front surface and tape rear surface, which have adhesiveness, on the both surfaces of a substrate that comprises a material quality, such as foamed resin, which has flexibility. Since the adhesive-tape portion per se possesses flexibility by means of the fact that it has the substrate, even if the weight's shape does not coincide with a wheel' s shape completely, the adhesive-tape portion per se absorbs the configurational changes, and thereby the adhesiveness between the weight and a wheel enhances.

The release coated paper is a member, which covers the tape rear surface in such a state that it is detachable therefrom. The release coated paper protects an adhesive surface of the tape rear surface before the wheel balance weight is assembled with a wheel. The release coated paper is detached when assembling the wheel balance weight with a wheel.

And, in the wheel balance weight according to the present invention, the adhesive-tape portion is formed so that its width becomes less than the weight's width; and the release coated paper is formed so that its width is a length surpassing the tape portion's width and becomes the weight's width or less. The wheel balance weight according to the present invention is such that, by the fact that the widths of the adhesive-tape portion and release coated paper are prescribed respectively, the release coated paper becomes likely to be peeled off. Here, the widths of the weight, adhesive-tape portion and release coated paper specify their respective lengths in the width direction of the substantially-strip-shaped weight.

By the fact that the width of the adhesive-tape portion is formed shorter than the width of the weight, a part in which the weight rear surface, which is not covered with the adhesive-tape portion, is exposed comes to exist at an end in the width direction of the weight in such a sate the tape front surface of the adhesive-tape portion is bonded on the weight rear surface. And, by the fact that the width of the release coated paper becomes wider than the width of the adhesive-tape portion, an end periphery in the width direction of the release coated paper protrudes at least beyond an end of the adhesive-tape portion in such a state that the release coated paper has covered the tape rear surface of the adhesive-tape portion. A clearance, which corresponds to the thickness of the adhesive-tape portion, exists between this protruding part of the release coated paper's end periphery and the weight rear surface. And, by means of this clearance, the release coated paper can be pinched with ease upon the assembly of the wheel balance weight, and thereby the detachment of the release coated paper becomes easy.

It is preferable that the width of the adhesive-tape portion can be shorter than the width of the weight by 0.1-6 mm. When the width of the adhesive-tape portion becomes shorter in excess of 6 mm, the bonding force for bonding the weight becomes smaller. Moreover, when the difference between the width of the adhesive-tape portion and the width of the weight is less than 0.1 mm, the protrusion length of the release coated paper is short, and thereby it becomes less likely that the release coated paper is pinched.

It is preferable that one of the ends of each of said adhesive-tape portion and said release coated paper can coincide with one of the ends of said weight. By the fact that one of the ends of the adhesive-tape portion coincides with that of the weight, the side on another end of the weight rear surface comes to be exposed when the adhesive-tape portion is fixed to the weight rear surface. And, the release coated paper, too, is such that, by the fact that one of the ends coincides therewith, a part to be pinched upon peeling off the release coated paper (the protruding part of the release coated paper) also comes to be positioned on the side of another end thereof. Here, the adhesive-tape portion can preferably be such that, in order to fix the weight to a wheel, the bonding surfaces to the weight and to the wheel can be wider. That is, it is preferable that the width of the adhesive-tape portion can be wider (the widthwise length of the adhesive-tape portion can be longer). When making the widthwise length of the adhesive-tape portion longer, the protruding length of the protruding portion of the release coated paper (a part to be pinched when detaching the release coated paper) becomes shorter relatively. And, by aligning one of the ends of the adhesive tape with that of the weight, it is possible to make the widthwise length of the weight rear surface's exposed part longest; as a result, it is possible to make the protrusion length of the release coated paper's protruding part longest. As a result of this, it becomes likely that the release coated paper can be peeled off.

It is preferable that the release coated paper can be such that its width can be formed so as to become identical with the weight' s width. By the fact that the release coated paper's width becomes identical with the weight's width, it is possible to make the release coated paper's protruding portion longest. Moreover, when the release coated paper' s width becomes longer than the weight' s width, the end periphery of the release coated paper has come to protrude beyond a widthwise end of the weight, this part, which protrudes beyond the weight, is folded to bend so that such drawbacks occur that it becomes less likely that the release coated paper is pinched, and that the release coated paper gets hooked on it to be detached eventually.

In the wheel balance weight according to the present invention, it is preferable that the weight can include a grooved portion, which extends in the width direction of the substantially strip shape. By the fact that the weight includes a grooved portion, it is possible to carry out deforming the weight in such a shape that coincides with the curved shape of a wheel's inner peripheral surface with ease upon assembling the wheel balance weight with a wheel. More concretely, the wheel balance weight according to the present invention is assembled with a wheel in such a state that the longitudinal direction of the weight coincides with the peripheral direction of a wheel's inner peripheral surface. That is, the weight is assembled in such a state that the longitudinal direction is curved like an arc shape. And, when a grooved portion is formed in the weight, a force concentrates on this grooved portion upon applying the force in order to curve the weight so that the weight curves at the grooved portion, and thereby it is possible to turn it into a predetermined curved shape with a much smaller force.

Moreover, by the fact that it has a grooved portion, it is possible to simply carry out the adjustment of the weight's mass. Concretely, since the weight's thickness becomes thinner partially at the grooved portion, this part is such that it is possible to more simply carry out the cutting off thereat than at the other parts (the parts whose thickness is not thinner). Moreover, by repeatedly giving a stress to the grooved portion in such directions to open and close it (by repeating bending it back and forth), it is possible to cut off the weight by causing fracture at the grooved portion. That is, without ever using any special tools, it is possible to carry out the adjustment of the weight's mass with manual labor.

The grooved portion is such that it is preferable to dispose it at such intervals that the mass of parts, which are held between grooved portions, becomes a predetermined mass. Note herein that the "parts, which are held between grooved portions" are the parts that are held between the neighboring grooved portions, which get lined up in the longitudinal direction of the strip-shaped weight. And, by the fact that the mass of parts, which are held between grooved portions, becomes a predetermined mass, it is possible to simply carry out the adjustment of the weight's mass.

The grooved portion is such that either forming it in either one of the weight front surface and the weight rear surface or forming it in both surfaces is allowable. Moreover, regarding the grooved portion's shape (cross-sectional shape), it is not one which is limited in particular. For example, either one of cross-sectionally substantially letter "V" shapes, substantially letter "U" shapes, and substantially dented shapes is allowable.

It is preferable that the weight can be formed as an arc shape, which goes along to a wheel' s inner peripheral surface. Since the wheel balance weight according to the present invention is attached onto the inner peripheral surface of a wheel's rim, the attachment onto a wheel can be done easily when it curves along the inner peripheral surface of this rim. In this instance, it is preferable that parts, which are held between the weight's grooved portions, can be curved like a substantially arc shape, respectively.

It is preferable that the weight can preferably include an identification indicator on its surface. As for this identification indicator, it is possible to name the mass of the weight or the center of gravity of the weight, for instance. When indicating the weight' s center-of-gravity position, it is possible to simply carry out the positioning upon assembling the wheel balance weight with a wheel. When indicating the weight's mass, it becomes possible to simply identify and then select the weight with a desirable mass. Moreover, when indicating the mass for each of the parts of the weight, which are held between the grooved portions of the weight, it is possible to simply obtain the weight with a desirable mass by cutting off the weight.

It is preferable that the weight can be such that a surface treatment can be performed thereto. By performing a surface treatment onto the weight, it is possible to make the appearance of the weight neat, and additionally to inhibit rust from arising on the weight. As for such a surface treatment, it is possible to name surface treatments, which are performed onto the weight comprising iron-system metal, such as a zinc chromate treatment, a silver powder painting, chromium plating, and a baking-type zinc compound composite film.

Since the wheel balance weight according to the present invention is such that the release coated paper becomes less likely to fold and bend, or to deform, prior to the assemblage, it is possible to easily pinch the release coatedpaper. Moreover, since the release coated paper becomes less likely to be detached before the assembling operation, it is easy to inhibit the occurrence of faulty products, which result from the come-off release coated paper, and additionally it is possible to improve the workability upon the assemblage as well.

The wheel balance weight according to the present invention is assembled with an inner peripheral surface of a wheel's rim to use. And, since the adhesive-tape portion carries out the assemblage onto a wheel, it is possible to carry out the assemblage regardless of the wheel' s shapes. That is, the wheel balance weight according to the present invention is such that it is possible to assemble it not only with automobiles' wheels but also with two-wheel vehicles' wheels.

(Second Invention)

A wheel balance weight according to the present invention includes a weight, an adhesive-tape portion, and a release coated paper.

The weight is a substantially-strip-shaped member, which has a weight front surface and a weight rear surface being disposed back to back. The weight cancels imbalance in a wheel assembly when being assembled with a wheel. By the fact that the weight is a substantially strip shape, it becomes easy to curb it like an arc shape in the longitudinal direction by applying a stress in the thickness-wise direction of the weight per se. By means of this, it is possible to deform (curb) the weight in such a shape that goes along the curved shape of wheel. When the weight is curbed in such a shape that goes along the shape of wheel, the adhesiveness of the wheel balance weight (the weight) to the wheel improves. When the adhesiveness improves, the contact area between the weight and the wheel increases, and thereby the wheel balance weight becomes much less likely to come off from the wheel. The weight can preferably be an oblong shape (a rectangular shape), which has a predetermined width, and which extends in the perpendicular direction to the width direction. Moreover, it is preferable that the weight can be such that the substantially strip shape's thickness can be uniform virtually.

Although the weight is not one whose material quality is limited, it is preferable that it can comprise a non-lead-system metal. Non-lead-system metals are such that, even if they should be dumped into the natural world, they exert less environmental load. As for the non-lead-systemmetal for forming the weight, it is possible to name iron-system metals, such as pure iron, steel and stainless, in which iron is adapted to being the major component.

The adhesive-tape portion is a member, which has a tape front surface and a tape rear surface being disposed back to back, in which the tape front surface is fixed to the weight rear surface, and in which the tape rear surface is to be bonded onto a wheel. That is, the adhesive-tape portion bonds (adheres) the weight onto a wheel. The adhesive-tape portion is such that, as far as being a member that can bond the weight onto a wheel, it is not one which is limited; for example, it is possible to name double-sided adhesive tapes, which have an adhesive surface on the both surfaces.

It is preferable that the adhesive-tape portion can have the tape front surface and tape rear surface, which have adhesiveness, on the both surfaces of a substrate that comprises a material quality, such as foamed resin, which has flexibility. Since the adhesive-tape portion per se possesses flexibility by means of the fact that it has the substrate, even if the weight's shape does not coincide with a wheel' s shape completely, the adhesive-tape portion per se absorbs the configurational changes, and thereby the adhesiveness between the weight and a wheel enhances.

The release coated paper is a member, which covers the tape rear surface at least in such a state that it is detachable therefrom. The release coated paper protects an adhesive surface of the tape rear surface before the wheel balance weight is assembled with a wheel. The release coated paper is detached when assembling the wheel balance weight with a wheel.

And, in the wheel balance weight according to the present invention, the adhesive-tape portion includes a slit between an end and another end in the width direction; and it is bonded onto the wheel in such a state that a protruding portion on the another-end side is cut off at least from the slit of the adhesive-tape portion.

The wheel balance weight according to the present invention includes a protruding portion on an end in the width direction of the adhesive-tape portion in a state prior to being assembled with a wheel. And, this protruding portion is cut off therefrom when assembling it with a wheel. That is, the protruding portion (and the release coated paper) is pinched. In a state prior to being assembled with a wheel, the protruding portion is formed of the adhesive-tape portion and the release coated paper. That is, the protruding portion has high strength. By means of this strength, the part, which protrudes from the weight, is such that folding and bending, or deformation, becomes less likely to occur therein, thereby becoming likely to be pinched when assembling it with a wheel.

And, the wheel balance weight according to the present invention is assembled with a wheel in such a state that the protruding portion, which protrudes beyond the weight, is removed. By means of this, the degradation of appearance when the wheel balance weight is assembled with a wheel can be suppressed.

The adhesive-tape portion includes a slit for cutting off the protruding portion. By means of the fact that the adhesive-tape portion includes a slit, it is possible to cut off the adhesive-tape portion at the slit, and thereby it is possible to remove the protruding portion simply.

It is preferable that the slit, which is formed in the adhesive-tape portion, can be formed in a tape front surface, because the tape rear surface of the adhesive-tape portion is covered with the release coated paper. It is allowable that the slit can be formed so as to make it possible to cut off the protruding portion at least, and it is not one whose shape is limited in particular. For example, it is possible to name grooves of cross-sectionally substantially letter "V" shapes, substantially letter "U" shapes, substantially dented shapes and the like, and perforations, which are formed in the adhesive-tape portion.

A location at which the slit is formed in the width direction of the adhesive-tape portion is not one which is limited in particular. However, it is necessary to secure a sufficient amount of the adhesive-tape portion for bonding/fixing the weight on a wheel when the protrusion is removed.

Although the adhesive-tape portion is not one whose width is limited in particular, it is preferable that its width can be a width of the weight or more. Moreover, the wheel balance weight according to the present invention is such that it is preferable that a width of the adhesive-tape portion's part to be bonded onto the weight can coincide with a width of the weight. Moreover, the wheel balance weight according to the present invention is such that it is preferable that another-end side of the adhesive-tape portion can protrude beyond another end of the weight.

It is preferable that the slit can be disposed along an end of the weight in the width direction. By means of the fact that the slit is disposed along an end of the weight in the width direction, the adhesive-coated portion remains in such a state that it is fixed on the entire surface of the weight rear surface when cutting off the protruding portion. That is, it is possible to retain the contact area to a wheel greatly.

When the tape front surface of the adhesive-tape portion has adhesiveness, it is preferable that the protrusion portion's tape front surface can be covered with the release coated paper. By providing the release coated paper also on this tape front surface when the protruding portion's tape front surface has adhesiveness, the handling of the protruding portion becomes simple. That is, the protruding portion' s tape surface portion comes not to be bonded onto unnecessary sites. Here, the release coated paper that covers the protruding portion's tape front surface can be either integral with the release coated paper that covers the tape rear surface, or independent thereof.

It is preferable that the slit can be disposed at a position, which faces the weight rear surface, and that the tape surface from an end of the adhesive-tape portion to the slit can be covered with the release coated paper. In the case where the slit is disposed at a position that faces the weight rear surface, it becomes likely to pinch the protruding portion manually because the length of a part, which is cut off upon being assembled with a wheel, becomes longer. As a result of this, the assembly workability improves. Moreover, in the case where the slit is disposed at a position that faces the weight rear surface, the width of the adhesive-tape portion upon being assembled with a wheel becomes shorter than the width of the weight. When the width of the adhesive-tape portion becomes shorter, it becomes less likelytovisuallyidentifytheadhesive-tape portion in such a state that the wheel balance weight is attached on a wheel. As a result of this, the appearance of the wheel balance weight improves in such a state that it is assembled with a wheel.

It is preferable that the wheel balance weight according to the present invention can have another weight at the protruding portion. That is, by means of the fact that the two weights share the one adhesive-tape portion, it is possible to pinch the other one of the weights upon assembling the one of the weights with a wheel, and thereby the workability improves.

In the wheel balance weight according to the present invention, it is preferable that the weight can include a grooved portion, which extends in the width direction of the substantially strip shape. By the fact that the weight includes a grooved portion, it is possible to carry out deforming the weight in such a shape that coincides with the curved shape of a wheel's inner peripheral surface with ease upon assembling the wheel balance weight with a wheel. More concretely, the wheel balance weight according to the present invention is assembled with a wheel in such a state that the longitudinal direction of the weight coincides with the peripheral direction of a wheel' s inner peripheral surface. That is, the weight is assembled in such a state that it is curved like an arc shape in its longitudinal direction. And, when a grooved portion is formed in the weight, since a force concentrates on this grooved portion upon applying the force in order to curve the weight so that the weight curves at the grooved portion, it is possible to turn it into a predetermined curved shape with a much smaller force.

Moreover, by the fact that it has a grooved portion, it is possible to simply carry out the adjustment of the weight's mass. Concretely, since the weight's thickness becomes thinner partially at the grooved portion, this part is such that it is possible to more simply carry out the cutting off thereat than at the other parts (the parts whose thickness is not thinner). Moreover, by repeatedly giving a stress to the grooved portion in such directions to open and close it (by repeating bending it back and forth), it is possible to cut off the weight by causing fracture at the grooved portion. That is, without ever using any special tools, it is possible to carry out the adjustment of the weight's mass with manual labor.

The grooved portion is such that it is preferable to dispose it at such intervals that the mass of parts, which are held between grooved portions, becomes a predetermined mass. Note herein that the "parts, which are held between grooved portions" are the parts that are held between the neighboring grooved portions, which get lined up in the longitudinal direction of the strip-shaped weight. And, by the fact that the mass of parts, which are held between grooved portions, becomes a predetermined mass, it is possible to simply carry out the adjustment of the weight's mass.

The grooved portion is such that either forming it in either one of the weight front surface and the weight rear surface or forming it in both surfaces is allowable. Moreover, regarding the grooved portion's shape (cross-sectional shape), it is not one which is limited in particular. For example, either one of cross-sectionally substantially letter "V" shapes, substantially letter "U" shapes, and substantially dented shapes is allowable.

It is preferable that the weight can be formed as an arc shape, which goes along to a wheel' s inner peripheral surface. Since the wheel balance weight according to the present invention is attached onto the inner peripheral surface of a wheel's rim, the attachment onto a wheel can be done easily when it curves along the inner peripheral surface of this rim. In this instance, it is preferable that parts, which are held between the weight's grooved portions, can be curved like a substantially arc shape, respectively.

It is preferable that the weight can preferably include an identification indicator on its surface. As for this identification indicator, it is possible to name the mass of the weight or the center of gravity of the weight, for instance. When indicating the weight' s center-of-gravity position, it is possible to simply carry out the positioning upon assembling the wheel balance weight with a wheel. When indicating the weight's mass, it becomes possible to simply identify and then select the weight with a desirable mass. Moreover, when indicating the mass for each of the parts of the weight, which are held between the grooved portions of the weight, it is possible to simply obtain the weight with a desirable mass by cutting off the weight.

It is preferable that the weight can be such that a surface treatment can be performed thereto. By performing a surface treatment onto the weight, it is possible to make the appearance of the weight neat, and additionally to inhibit rust from arising on the weight. As for such a surface treatment, it is possible to name surface treatments, which are performed onto the weight comprising iron-system metal, such as a zinc chromate treatment, a silver powder painting, chromium plating, and a baking-type zinc compound composite film.

Since the wheel balance weight according to the present invention is such that the release coated paper becomes less likely to fold and bend, or to deform, prior to the assemblage, it is possible to easily pinch the release coated paper. Moreover, since the release coated paper becomes less likely to be detached before the assembling operation, it is easy to inhibit the occurrence of faulty products, which result from the come-off release coated paper, and additionally it is possible to improve the workability upon the assemblage as well.

The wheel balance weight according to the present invention is assembled with an inner peripheral surface of a wheel's rim to use. And, since the adhesive-tape portion carries out the assemblage onto a wheel, it is possible to carry out the assemblage regardless of the wheel' s shapes. That is, the wheel balance weight according to the present invention is such that it is possible to assemble it not only with automobiles' wheels but also with two-wheel vehicles' wheels.

### EXAMPLES

Hereinafter, the present invention will be explained using examples.

Wheel balance weights were manufactured as examples according to the present invention.

(Example No. 1)

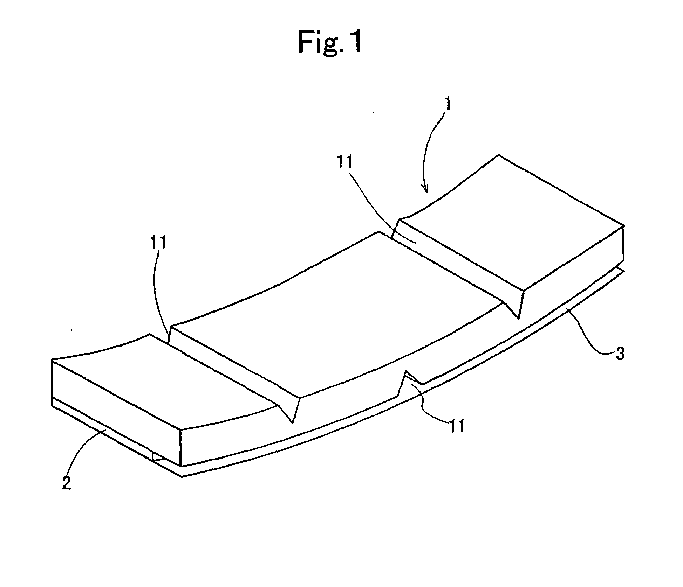

The present example is a wheel balance weight that is illustrated in Figs. 1-2. A perspective diagram of the wheel balance weight according to the present example is shown in Fig. 1, and its cross section at the I-I cross section in Fig. 1 is shown in Fig. 2.

The wheel balance weight according to the present example is constituted of a weight 1, a double-sided adhesive tape 2 and a release coated paper 3.

The weight 1 is completed by forming a substrate 10 by molding a strip-shaped steel plate whose width is 15-25 mm, thickness is 2-6 mm and a length of 5-200 mm; and by forming a baking-type zinc compound composite film 12 on the surfaces of the substrate 10. This weight 1 is such that grooved portions 11 are disposed in its surface 1a. These grooved portions 11 are formed as a letter "V" shape whose opening width is 0.5-5 mm and depth is 1.9-5.9 mm. And, the weight 1 is curbed so that it becomes like an arc shape in the strip's longitudinal direction. At this moment, each of the parts, which are demarcated by the grooved portions 11 of the weight 1, is also curbed like an arc shape.

The double-sided adhesive tape 2 is such that an adhesive surface is formed on both surfaces of a strip-shaped substrate 20 comprising a foamed resin having elasticity and flexibility, both surfaces which are disposed back to back. The double-sided adhesive tape 2 is formed as a strip shape whose width is 9-25 mm, thickness is 0.5-1.6 mm and length is 5-200 mm. Here, the double-sided adhesive tape 2 is such that an ordinary double-sided adhesive tape, which has been used in a conventional wheel balance weight as well, is used.

The double-sided adhesive tape 2 is such that a tape front surface 2a is bonded/fixed on the weight 1's rear surface 1b. At this moment, the double-sided adhesive tape 2 is such that an end 2c in the width direction is bonded/fixed in such a state that it coincides with an end 1c of the weight 1 in the width direction.

The double-sided adhesive tape 2' s tape rear surface 2b is covered with the release coated paper 3. The release coated paper 3 is formed as a strip shape whose size is the same as that of the weight 1. Concretely, the release coated paper 3 is formed as a strip shape whose width is 15-35 mm, thickness is 0.01-0.1 mm and length is 5-200 mm. This release coated paper 3 covers the tape rear surface 2b in such a state that an end 3c in the width direction coincides with an end 1c of the weight 1 in the width direction and an end 2c of the double-sided adhesive tape 2 in the width direction.

The wheel balance weight according to the present example is such that, as illustrated in Fig. 2, the side of another end 1d of the weight 1 in the width direction is such that the weight rear surface 1b is exposed by 0.1-0.6 mm. Moreover, another end 3d of the release coated paper 3 in the width direction is exposed.

(Assembly of Wheel Balance Weight)

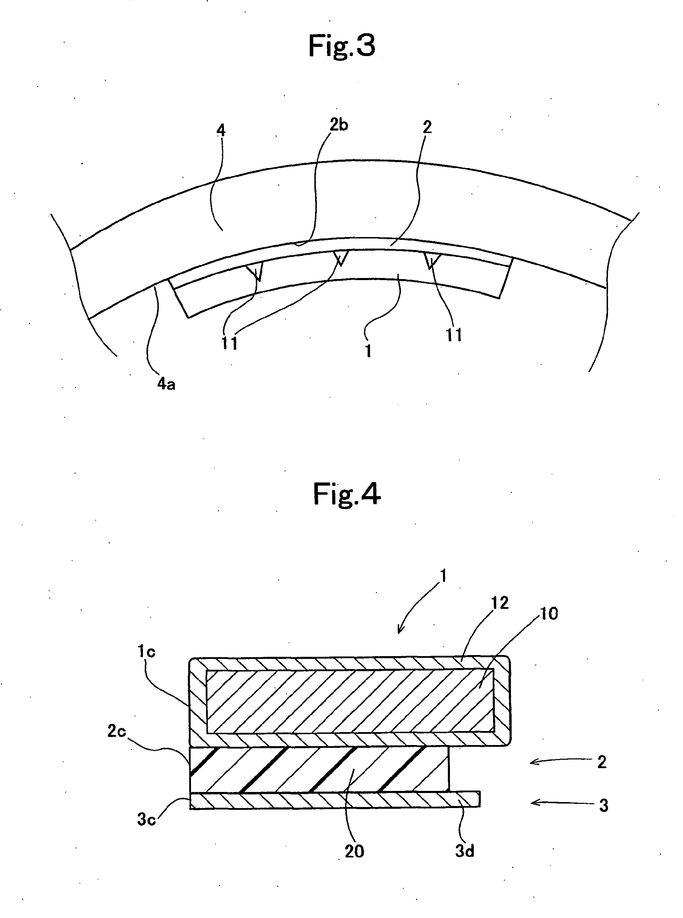

The wheel balance weight according to Example No. 1 was actually assembled with a wheel in accordance with the following procedures. Here, the state that the wheel balance weight according to Example No. 1 was assembled with the inner peripheral surface of a wheel is illustrated in Fig. 3.

First of all, the tape rear surface 2b of the double-sided adhesive tape 2 was exposed by peeling off the release coated paper 3 from the wheel balance weight according to the example. Subsequently, this exposed tape rear surface 2b was adhered at a predetermined position in the inner peripheral surface of the wheel 4's rim. At this moment, it was possible to break in the weight 1 onto the inner peripheral surface 4a of the wheel 4' s rim by causing deformations at the grooved portions 11 by pressing the weight 1 onto the inner peripheral surface 4a of the wheel 4' s rim. Moreover, the wheel balance weight according to the present example was bonded with high adhesiveness, because the superficial irregularities, which were caused by means of the weight 1's deformation (curving), in the weight rear surface 1b of the weight 1 due to the fact that the double-sided adhesive tape2possessedflexibility and elasticity. By means of this, it was possible to assemble the wheel balance weight according to the present example with the wheel.

The wheel balance weight according to the present example was such that, upon detaching the release coatedpaper 3 for assembling it with the wheel 4, it was possible to simply pinch the end 30 Of the release coated paper 3 and thereby it was possible to simply detach the release coated paper 3. That is, on the side of another end 1d of the weight 1 in the width direction, there was formed a clearance, which corresponded to the thickness of the double-sided adhesive tape 2, between the weight rear surface 1 and the release coated paper 3, and thereby it was possible to simply pinch another end 3d of the release coated paper 3 by inserting the tip of a finger into this clearance. Moreover, since the wheel balance weight according to the present example was such that the release coated paper 3 was not formed to protrude beyond an end of the weight 1 in the width direction, the release coated paper was neither folded or bent, nor was deformed, so that it could be pinched with ease. As a result of this, the wheel balance weight according to the present example was such that the workability when assembling the wheel balance weight improved.

Moreover, since the wheel balance weight according to the present example was such that the release coated paper 3 became less likely to be detached before the operation for assembling it with the wheel 4, it was possible to inhibit the occurrence of faulty products resulting from come-off release coated paper. That is, the wheel balance weight according to the present example was such that the handling prior to the assembly operation became easy.

Inaddition, the wheel balance weight according to the present example was such that it was possible to make the width of the double-sided adhesive tape 2 shorter, and thereby it was possible to reduce the costs required for the double-sided adhesive tape 2.

(Example No. 2)

The present example is a wheel balance weight whose cross-sectional shape is illustrated in Fig. 4.

The present example is a wheel balance weight with the same construction as that of Example No. 1 except that the width of the release coated paper 3 differs. The release coated paper 3 according to the present example is such that the width is 14-24 mm and is formed shorter than the width of the weight 1 by 0.1-1.0 mm. And, this release coated paper 3 is assembled so that an end 3c coincides with an end 1c of the weight 1 and an end 2c of the double-sided adhesive tape 2.

In the present example as well, it was possible to simply detach the release coated paper 3 in the same manner as in the case of Example No. 1. That is, in the present example as well, an effect that the workability upon the assemblage improved was demonstrated in the same manner as Example No. 1.

Moreover, in the wheel balance weight according to the present example as well, it demonstrated an effect that the handling before the assembly operation became easy in the same manner as in the case of Example No. 1.

(Example No. 3)

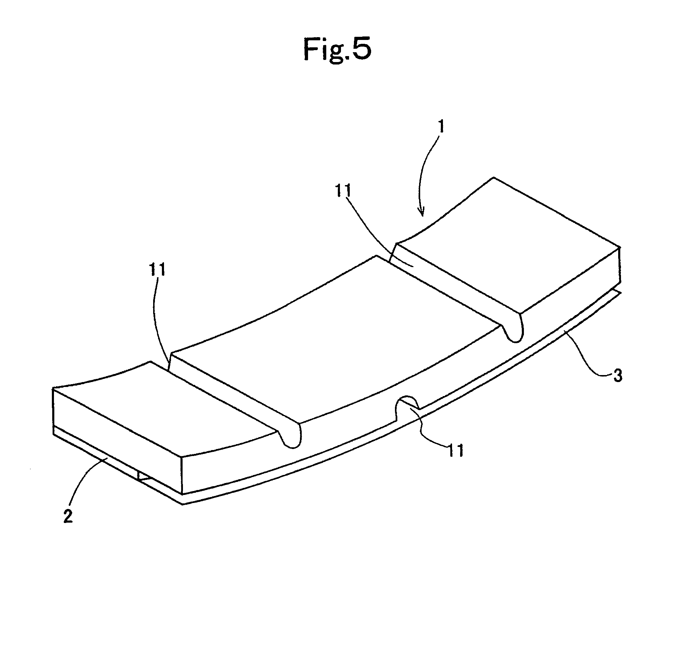

The present example is a wheel balance weight that is illustrated in Fig. 5.

The present example is a wheel balance weight with the same construction as that of Example No. 1 except that the grooved portions 11 of the weight 1 differ. The respective grooved portions 11, which are disposed in the weight 1 according to the present example is formed as a cross-sectionally letter "U" shape whose opening width is 0.1-6 mm and depth is 1.9-5.9 mm. The grooved portions 11 of the weight 1 according to the present example are formed in both surfaces of the weight 1, the weight front surface 1a and the weight rear surface 1b.

In the present example as well, it was possible to simply detach the release coated paper 3 in the same manner as in the case of Example No. 1. That is, in the present example as well, an effect that the workability upon the assemblage improved was demonstrated in the same manner as Example No. 1. Moreover, the wheel balance weight according to the present example was bonded with high adhesiveness, because the changes of the opening width were absorbed by means of the flexibility and elasticity of the double-sided adhesive tape 2 even when the opening width of the grooved portions 11, which were opened in the rear surface 1b, was changed by curving the weight 1.

Moreover, in the wheel balance weight according to the present example as well, it demonstrated an effect that the handling before the assembly operation became easy in the same manner as in the case of Example No. 1.

(Example No. 4)

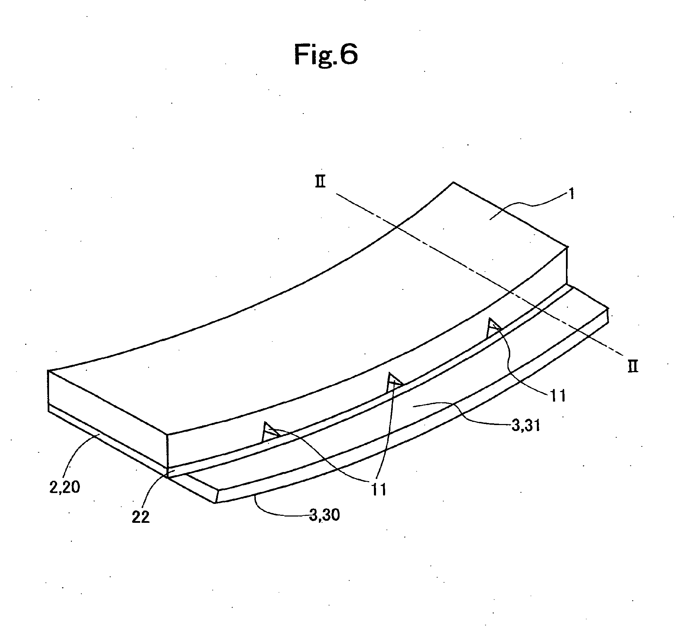

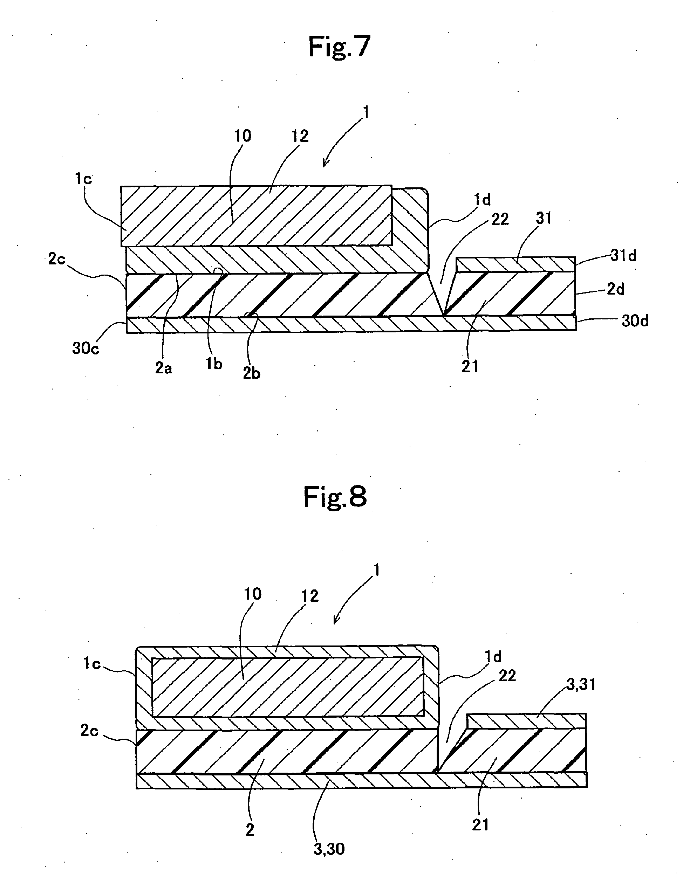

The present example is a wheel balance weight that is illustrated in Figs. 6-7. A perspective diagram of the wheel balance weight according to the present example is shown in Fig. 6, and its cross section at the II-II cross section in Fig. 6 is shown in Fig. 7.

The wheel balance weight according to the present example is constituted of a weight 1, a double-sided adhesive tape 2 and a release coated paper 3.

The weight 1 is completed by forming a substrate 10, which is made by molding a strip-shaped steel plate whose width is 5-25 mm, thickness is 2-6 mm and a length of 5-200 mm; and by forming a baking-type zinc compound composite film 12 on the surfaces of the substrate 10. This weight 1 is such that grooved portions 11 are disposed in its surface 1a. These grooved portions 11 are demarcated as a letter "V" shape whose opening width is 0.1-6 mm and depth is 1.9-5.9 mm. And, the weight 1 is curbed so that it becomes like an arc shape in the strip's longitudinal direction. At this moment, the parts 12 of the weight 1, which are demarcated by the grooved portions 11, are also curbed like an arc shape.

The double-sided adhesive tape 2 is such that an adhesive surface is formed on both surfaces of a strip-shaped substrate 20 comprising a foamed resin having elasticity and flexibility, both surfaces which are disposed back to back. The double-sided adhesive tape 2 is formed as a strip shape whose width is 15-31 mm, thickness is 0.5-1.6 mm and length is 5-200 mm. Here, the double-sided adhesive tape 2 is such that an ordinary double-sided adhesive tape, which has been used in a conventional wheel balance weight as well, is used.

The double-sided adhesive tape 2 is such that a tape front surface 2a is bonded/fixed on the weight 1's rear surface 1b. The double-sided adhesive tape 2 is such that an end 2c in the width direction is bonded/fixed in such a state that it coincides with an end 1c of the weight 1 in the width direction. Here, the double-sided adhesive tape 2 is such that the width is formed wider than that of the weight 1, and that the side of another end 2d forms a protruding portion 21 in such a state that it is fixed on the rear surface 1b of the weight 1.

The surfaces of the double-sided adhesive tape 2' s tape rear surface 2b and protruding portion 21 are covered with the release coated paper 3. The release coated paper 3 includes a strip-shaped release coated paper 30, which corresponds to the tape rear surface 2b of the double-sided adhesive tape 2, and a strip-shaped release coated paper 31, which corresponds to the protruding portion 21 thereof.

The release coated paper 30 is assembled so that an end 30c coincides with an end 1c of the weight 1 and an end 2c of the double-sided adhesive tape 2. The release coated paper 31 is assembled so that another end 31d coincides with another end 2d of the double-sided adhesive tape 2 and another end 30d of the release coated paper 30.

Moreover, in the wheel balance weight according to the present example, a slit 22 is formed in the double-sided adhesive tape 2' s tape front surface 2a. In such a state that the double-sided adhesive tape 2 is fixed on the weight 1, the slit 22 is formed along another end 1d of the weight 1 in the width direction. The slit 22 is demarcated as a letter "V" shape whose opening width is 0.1-6 mm and depth is 0.5-1.6 mm.

(Assembly of Wheel Balance Weight)

The wheel balance weight according to Example No. 4 was actually assembled with a wheel in accordance with the following procedures.

First of all, the protruding portion 21 was cut off from the wheel balance weight according to the example and additionally the release coated paper 30 was peeled off therefrom, thereby turning the double-sided adhesive tape 2 into a shape, which corresponded to the rear surface 1b of the weight 1, and additionally thereby exposing the tape rear surface 2b of this part. Subsequently, this exposed tape rear surface 2b was adhered at a predetermined position in the inner peripheral surface of the wheel 4' s rim. At this moment, it was possible to break in the weight 1 onto the inner peripheral surface 4a of the wheel 4' s rim by causing deformations at the grooved portions 11 by pressing the weight 1 onto the inner peripheral surface 4a of the wheel 4' s rim. By means of this, it was possible to assemble the wheel balance weight according to the present example with the wheel.

In the wheel balance weight according to the present example, when peeling off the release coated paper 3 in order to assemble it with a wheel 4, a part was pinched, part which corresponded to the double-sided adhesive tape 2's protruding portion 21 that protruded beyond the weight 1 in the width direction, and then the protruding portion 21 was cut off. At this moment, a part, which corresponded to the protruding portion 21 to be pinched, had a summed thickness of the release coated paper 3 and protruding portion 21. Accordingly, a part, which protruded beyond the weight 1, came to have strength, and thereby bending or deformation came not to arise. That is, it was possible to simply pinch this protruding portion upon the assemblage, and thereby the workability upon the assemblage improved.

Moreover, since the wheel balance weight according to the present example was such that the release coated paper 3 became less likely to be detached before the operation for assembling it with the wheel 4, it was possible to inhibit the occurrence of faulty products resulting from come-off release coated paper. That is, the wheel balance weight according to the present example was such that the handling prior to the assembly operation became easy.

(Example No. 5)

The present example is a wheel balance weight whose cross-sectional shape is illustrated in Fig. 8.

The present example is a wheel balance weight with the same construction as that of Example No. 4 except that the shape of the double-sided adhesive tape 2' s slit 22 differs. The slit 22 according to the present example is such that the cross section includes a letter "V" shape, and that, of the paired side wall surfaces demarcating the letter "V" shape, a side wall surface on the side of an end 2c is formed along another 1d of the weight 1 in the width direction in such a state that it extends in the thickness direction.

In the present example as well, it was possible to simply pinch a part, which corresponded to the protruding portion 21, in the same manner as in the case of Example No. 4. That is, in the present example as well, an effect that the workability upon the assemblage improved was demonstrated in the same manner as Example No. 4.

Moreover, in the wheel balance weight according to the present example as well, it demonstrated an effect that the handling before the assembly operation became easy in the same manner as in the case of Example No. 4.

Inaddition, the wheel balance weight according to the present example is such that the end surface after cutting off the protruding portion 21 of the double-sided adhesive tape 2 became a flat surface substantially, and thereby the appearance when attaching it to a wheel improved.

(Example No. 6)

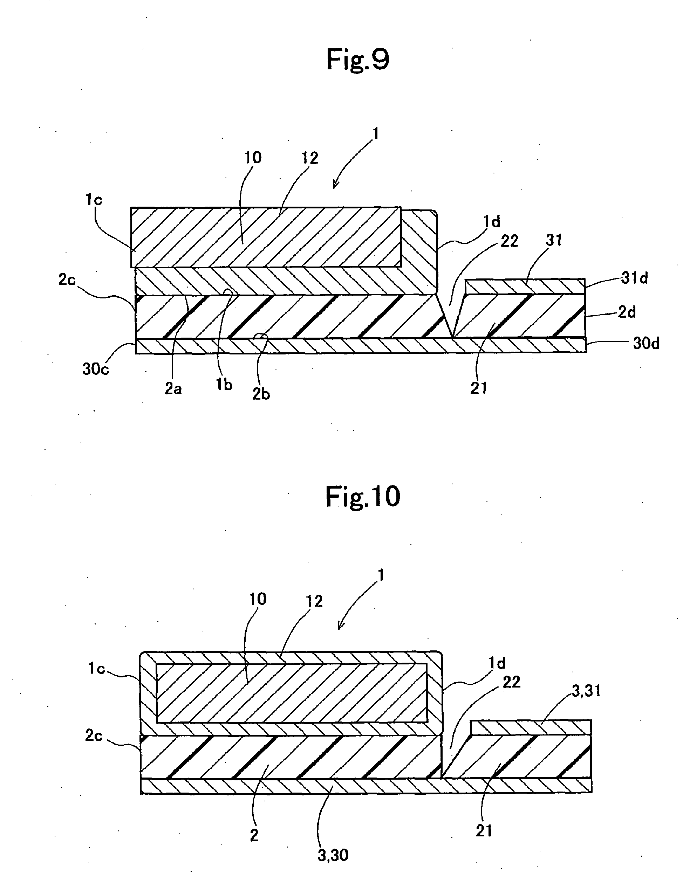

The present example is a wheel balance weight whose cross-sectional shape is illustrated in Fig. 9.

The present example is a wheel balance weight with the same construction as that of Example No. 4 except that the position at which the double-sided adhesive tape 2's slit 22 is formed differs. The slit 22 according to the present example is formed at a position of 1-10 mm from another end 1d of the weight 1 to the side of an end 1c thereof in the width direction. Note that, in the present example, the release coated paper 31, which covers the protruding portion 21, exists also at a position that faces the weight 1's rear surface 1b. That is, the side of the weight 1's another end 1d is such that the release coated paper 31 exists between the weight 1 and the double-sided adhesive tape 2.

In the present example as well, it was possible to simply pinch a part, which corresponded to the protruding portion 21, in the same manner as in the case of Example No. 4. That is, in the present example as well, the workability upon the assemblage improved in the same manner as Example No. 4.

Moreover, in the wheel balance weight according to the present example as well, it demonstrated an effect that the handling before the assembly operation became easy in the same manner as in the case of Example No. 4.

(Example No. 7)

The present example is a wheel balance weight whose cross-sectional shape is illustrated in Fig. 10.

The present example is a wheel balance weight with the same construction as that of Example No. 6 except that the width of the double-sided adhesive tape 2 differs. The double-sided adhesive tape 2 according to the present example is formed so as to become the same width as the width of the weight 1. That is, an end 2c of the double-sided adhesive tape 2, an end 1c of the weight 1c and an end 30c of the release coated paper 31 coincide with each other; and another end 2d of the double-sided adhesive tape 2, another end 1d of the weight 1c and another ends 30d, 31d of the release coated papers 30, 31 coincide with each other.

In the present example as well, it was possible to simply pinch a part, which corresponded to the protruding portion 21, in the same manner as in the case of Example No. 6. That is, in the present example as well, the workability upon the assemblage improved in the same manner as Example No. 6.

Moreover, in the wheel balance weight according to the present example as well, it demonstrated an effect that the handling before the assembly operation became easy in the same manner as in the case of Example No. 6.

(Example No. 8)

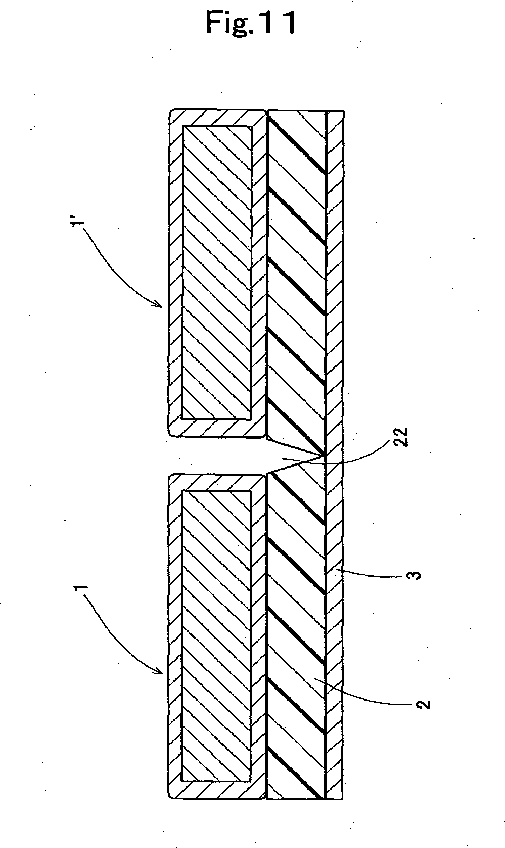

The present example is a wheel balance weight whose cross-sectional shape is illustrated in Fig. 11.

The wheel balance weight according to the present example is constituted of two weights 1, 1', a double-sided adhesive tape 2 and a release coated paper 3.

The weights 1, 1' are formed as the same shape with each other. Each of the two weights 1, 1' are a weight that is formed in the same manner as the weight of Example No. 4.

The double-sided adhesive tape 2 is such that an adhesive surface is formed on both surfaces of a strip-shaped substrate 20 comprising a foamed resin having elasticity and flexibility, both surfaces which are disposed back to back. The double-sided adhesive tape 2 is formed as a strip shape whose width is 30-60 mm, thickness is 0.5-1.6mmand length is 5-200 mm. Here, this double-sided adhesive tape 2 is the same double-sided adhesive tape as the double-sided adhesive tape of Example No. 4.

On the tape front surface 2a of the double-sided adhesive tape 2, the respective rear surfaces 1b, 1'b of the two weights 1, 1' are bonded/fixed. The double-sided adhesive tape 2 is bonded/fixed in such a state that an end 2c in the width direction coincides with an end 1c of the weight 1 in the width direction, and in such a state that another end 2d coincides with another end 1'd of the weight 1' in the width direction.

The tape rear surface 2b of the double-sided adhesive tape 2 is covered with the release coated paper 3. The release coated paper 3 includes a strip shape that corresponds to the tape rear surface 2b of the double-sided adhesive tape 2.

Moreover, the wheel balance weight according to the present example is such that a slit 22 is formed at a part being held between the two weights 1, 1' and being in the tape rear surface 2a of the double-sided adhesive tape 2. That is, the wheel balance weight according to the present example is formed so that the interval between the two weights 1, 1' becomes the opening width of the slit 22. Note that the slit 22 is formed as a letter "V" shape whose opening width is 0.1-6 mm and depth is 0.5-1.6 mm.

The present example included such a construction that the weights 1' was are bonded/fixed at the protruding portion 21 in the wheel balance weight according to Example No. 4. That is, a part, which corresponded to the protruding portion 21, became more likely to be pinched. Because of this fact, it demonstrated an effect that the workability upon the assemblage improved in the same manner as Example No. 4.

Moreover, in the wheel balance weight according to the present example as well, it demonstrated an effect that the handling before the assembly operation became easy in the same manner as in the case of Example No. 4.

In addition, the present example included such a construction that the weight 1' was bonded/fixed at the protruding portion 21 according to Example No. 4, and thereby an unnecessary part (a part to be discarded) was less likely to arise. That is, it was possible to reduce the costs required for the double-sided adhesive tape 2.

## Claims

1. Wheel balance weight including:
a substantially-strip-shaped weight (1) having a weight front surface (1a) and a weight rear surface (1b) being disposed back to back;
an adhesive-tape portion (2) having a tape front surface (2a) and a tape rear surface (2b) being disposed back to back, the tape front surface (2a) being fixed to the weight rear surface (1b), the tape rear surface (2b) being adapted to be bonded onto a wheel (4); and
a release coated paper (3) covering the tape rear surface (2b) in such a state that it is detachable therefrom;
the wheel balance weight being **characterized in that**:
the adhesive-tape portion (2) is formed so that its width becomes less than the weight's width; and
the release coated paper (3) is formed so that its width has a length surpassing the tape portion's width and has the weight's width or less.

2. The wheel balance weight set forth in claim 1, wherein one of the ends of each of said adhesive-tape portion (2) and said release coated paper (3) coincides with one of the ends of said weight (1).

3. The wheel balance weight according to claim 1, wherein said release coated paper (3) is formed so that its width becomes identical with said weight's width.

4. Wheel balance weight including:
a substantially-strip-shaped weight (1) having a weight front surface (1a) and a weight rear surface (1b) being disposed back to back;
an adhesive-tape portion (2) having a tape front surface (2a) and a tape rear surface (2b) being disposed back to back, the tape front surface (2a) being fixed to the weight rear surface (1b), the tape rear surface (2b) being adapted to be bonded onto a wheel (4); and
a release coated paper (3) covering the tape rear surface (2b) at least in such a state that it is detachable therefrom;
the wheel balance weight being **characterized in that**:
the adhesive-tape portion (2) includes a slit between an end and another end in the width direction; and
it is bonded onto the wheel (4) in such a state that a protruding portion (21) on the another-end side is cut off at least from the slit (22) of the adhesive-tape portion (2).

5. The wheel balance weight set forth in claim 4, wherein said slit (22) is disposed along one of ends of said weight (1) in the width direction.

6. The wheel balance weight set forth in claim 4, wherein a surface of said protruding portion (21) is covered with the release coated paper (3, 31) when said tape front surface of said adhesive-tape portion has adhesiveness.

7. The wheel balance weight set forth in claim 6, wherein said slit (22) is disposed at a position facing said weight rear surface (1b); and said tape front surface from an end of said adhesive-tape portion to said slit (22) is covered with the release coated paper (3, 31).

8. The wheel balance weight set forth in claim 4 having another weight (1') at said protruding portion (21).

## Patentansprüche

1. Radausgleichsgewicht, das folgendes aufweist:
ein im Wesentlichen streifenförmiges Gewicht (1) mit einer Gewichtsvorderfläche (1a) und einer Gewichtsrückfläche (1b), die Rücken an Rücken angeordnet sind;
einen Klebebandabschnitt (2) mit einer Bandvorderfläche (2a) und einer Bandrückfläche (2b), die Rücken an Rücken angeordnet sind, wobei die Bandvorderfläche (2a) an der Gewichtsrückfläche (1b) befestigt ist, wobei die Bandrückfläche (2b) angepasst ist, um auf ein Rad (4) geklebt zu werden; und
ein Lösebeschichtungspapier (3), das die Bandrückfläche (2b) in solch einem Zustand abdeckt, dass es davon lösbar ist;
wobei das Radausgleichsgewicht **dadurch gekennzeichnet ist, dass**:
der Klebebandabschnitt (2) derart ausgebildet ist, dass dessen Breite geringer als die Gewichtsbreite wird;
das Lösebeschichtungspapier (3) derart ausgebildet ist, dass dessen Breite eine Länge aufweist, die die Breite des Bandabschnitts übertrifft, und die Breite des Gewichts oder weniger aufweist.

2. Radausgleichsgewicht nach Anspruch 1, wobei eines der Enden von jedem von dem Klebebandabschnitt (2) und dem Lösebeschichtungspapier (3) mit einem der Enden des Gewichts (1) übereinstimmt.

3. Radausgleichsgewicht nach Anspruch 1, wobei das Lösebeschichtungspapier (3) derart ausgebildet ist, dass dessen Breite identisch mit der Breite des Gewichts wird.

4. Radausgleichsgewicht, das folgendes aufweist:
ein im Wesentlichen streifenförmiges Gewicht (1) mit einer Gewichtsvorderfläche (1a) und einer Gewichtsrückfläche (1b), die Rücken an Rücken angeordnet sind;
einen Klebebandabschnitt (2) mit einer Bandvorderfläche (2a) und einer Bandrückfläche (2b), die Rücken an Rücken angeordnet sind, wobei die Bandvorderfläche (2a) an der Gewichtsrückfläche (1b) befestigt ist, wobei die Bandrückfläche (2b) angepasst ist, um an ein Rad (4) geklebt zu werden;
ein Lösebeschichtungspapier (3), das die Bandrückfläche (2b) wenigstens in solch einem Zustand abdeckt, dass es davon lösbar ist;
wobei das Radausgleichsgewicht **dadurch gekennzeichnet ist, dass**:
der Klebebandabschnitt (2) einen Schlitz zwischen einem Ende und einem anderen Ende in der Breitenrichtung aufweist; und
es an das Rad (4) in solch einem Zustand geklebt wird, dass ein vorragender Abschnitt (21) auf der anderen Endseite zumindest von dem Schlitz (22) des Klebebandabschnitts (2) abgeschnitten ist.

5. Radausgleichsgewicht nach Anspruch 4, wobei der Schlitz (22) entlang einem Ende des Gewichts (1) in der Breitenrichtung angeordnet ist.

6. Radausgleichsgewicht nach Anspruch 4, wobei eine Fläche des vorragenden Abschnitts (21) mit dem Lösebeschichtungspapier (3, 31) abgedeckt ist, wenn die Bandvorderfläche des Klebebandabschnitts eine Haftfähigkeit aufweist.

7. Radausgleichsgewicht nach Anspruch 6, wobei der Schlitz (22) an einer Position angeordnet ist, die der Gewichtsrückfläche (1b) zugewandt ist; und die Bandvorderfläche von einem Ende des Klebebandabschnitts zu dem Schlitz (22) hin mit dem Lösebeschichtungspapier (3, 31) abgedeckt ist.

8. Radausgleichsgewicht nach Anspruch 4, das ein weiteres Gewicht (1') an dem vorragenden Abschnitt (22) aufweist.

## Revendications

1. Masse d'équilibrage de roues comportant :
une masse (1) essentiellement en forme de ruban ayant une surface avant de masse (1a) et une surface arrière de masse (1b) qui sont disposées dos à dos ;
une partie de ruban adhésif (2) ayant une surface avant du ruban (2a) et une surface arrière du ruban (2b) qui sont disposées dos à dos, la surface avant du ruban (2a) étant fixée à la surface arrière de masse (1b), la surface arrière du ruban (2b) étant adaptée pour être fixée sur une roue (4) ; et
un papier couché antiadhésif (3) recouvrant la surface arrière du ruban (2b) dans un état tel qu'il soit détachable de celle-ci ;
la masse d'équilibrage de roues étant **caractérisée en ce que** :
la partie de ruban adhésif (2) est formée de sorte que sa largeur devient inférieure à la largeur de la masse ; et
le papier couché antiadhésif (3) est formé de sorte que sa largeur ait une longueur dépassant la largeur de la partie de ruban et présente la même largeur de la masse ou moins.

2. Masse d'équilibrage de roues selon la revendication 1, dans laquelle l'une des extrémités de chacune de ladite partie de ruban adhésif (2) et dudit papier couché antiadhésif (3) coïncide avec l'une des extrémités de ladite masse (1).

3. Masse d'équilibrage de roues selon la revendication 1, dans laquelle ledit papier couché antiadhésif (3) est formé de sorte que sa largeur devient identique à ladite largeur de la masse.

4. Masse d'équilibrage de roues comportant :
une masse (1) essentiellement en forme de ruban ayant une surface avant de masse (1a) et une surface arrière de masse (1b) qui sont disposées dos à dos ;
une partie de ruban adhésif (2) ayant une surface avant du ruban (2a) et une surface arrière du ruban (2b) qui sont disposées dos à dos, la surface avant du ruban (2a) étant fixée à la surface arrière de masse (1b), la surface arrière du ruban (2b) étant adaptée pour être fixée sur une roue (4) ; et
un papier couché antiadhésif (3) recouvrant la surface arrière du ruban (2b) au moins dans un état tel qu'il soit détachable de celle-ci, la masse d'équilibrage de roues étant **caractérisée en ce que** :
la partie de ruban adhésif (2) comporte une fente entre une extrémité et une autre extrémité dans la direction de la largeur ; et
celle-ci est fixée sur la roue (4) dans un état tel qu'une partie en saillie (21) sur le côté de l'autre extrémité soit coupée au moins à partir de la fente (22) de la partie de ruban adhésif (2).

5. Masse d'équilibrage de roues selon la revendication 4, dans laquelle ladite fente (22) est disposée le long de l'une des extrémités de ladite masse (1) dans la direction de la largeur.

6. Masse d'équilibrage de roues selon la revendication 4, dans laquelle une surface de ladite partie en saillie (21) est recouverte du papier couché antiadhésif (3, 31) lorsque ladite surface avant du ruban de ladite partie de ruban adhésif présente une adhésivité.

7. Masse d'équilibrage de roues selon la revendication 6, dans laquelle ladite fente (22) est disposée dans une position faisant face à ladite surface arrière de la masse (1b), et ladite surface avant du ruban d'une extrémité de ladite partie de ruban adhésif à ladite fente (22) est recouverte d'un papier couché antiadhésif (3, 31).

8. Masse d'équilibrage de roues selon la revendication 4 comportant une autre masse (1') au niveau de ladite partie en saillie (21).
